# EUROPEAN PATENT SPECIFICATION

(11) **EP 1 448 669 B1**
(45) Date of publication and mention of the grant of the patent: **07.04.2010**
(21) Application number: 02781896.2
(22) Date of filing: 27.09.2002
(51) Int. Cl.: C08G 69/12

(54) **ADHESIVE COMPOSITION COMPRISING A POLYIMIDE COPOLYMER AND METHOD FOR PREPARING THE SAME**
BINDEMITTEL ENTHALTEND EIN POLYIMIDCOPOLYMER UND VERFAHREN ZU DESSEN HERSTELLUNG
COMPOSITION ADHÉSIVE COMPRENANT UN COPOLYMÈRE DE POLYIMIDE ET SA MÉTHODE DE PRÉPARATION

(30) Priority: 27.09.2001 KR 2001060252; 27.09.2002 KR 2002058609
(43) Date of publication of application: 25.08.2004
(73) Proprietor: LG Chem Ltd., Seoul 150-721 (KR)
(72) Inventor: AHN, Byeong-In, Yuseong-gu, 305-340 Daejeon-city (KR); KYUNG, You-Jin, Yuseong-gu, 305-503 Daejeon-city (KR); KO, Joo-Eun, 150-040 Seoul (KR); SONG, Heon-Sik, Yuseong-gu, 305-340 Daejeon-city (KR)
(74) Representative: Bernasconi, Jean Raymond
(86) International application number: PCT/KR2002/001828
(87) International publication number: WO 2003/027178

(56) References cited:
- EP-A- 0 261 575
- EP-A- 0 401 606
- JP-A- 9 055 583
- JP-A- 50 069 196
- US-A- 4 098 800
- US-A- 4 197 396
- US-A- 4 258 155
- US-A- 4 910 288

## Description

### (a) Field of the Invention

The present invention relates to a polyimide copolymer and methods for preparing the same, and more particularly to a polyimide copolymer and methods for preparing the same, which has superior adhesion strength, and simultaneously satisfies high heat resistance, and low water absorption rate, and thus parts of semiconductor devices can be effectively adhered.

### (b) Description of the Related Art

Generally, peripheral components comprising electronic parts, particularly semiconductor devices such as in IC packaging are adhered using a soldering method. However, because in IC packaging, a circuit line width becomes narrower and lead used in soldering causes environmental problems, a novel soldering method which does not use lead is required and thus an adhesive with high adhesion strength, high heat resistance, and a low water absorption rate is required so as to withstand soldering at 300 °C or higher.

In IC packaging, epoxy, acrylic and polyester have been mainly used as an adhesive. However, although they have superior adhesion strength, they have disadvantages in heat resistance and water absorption rate.

Therefore, polyimide is used as an adhesive, simultaneously satisfying adhesion strength and heat resistance, but it cannot simultaneously satisfy adhesion strength, high heat resistance, and low water absorption rate.

USP No. 6,015,607 has described a flexible laminate adhering polyimide and copper foil using Ultem™ or Siltem™ made by adding silicone in an Ultem™-like structure. Additionally, USP No. 5,157,589 has described a method of using heat resistant adhesive with a different glass transition temperature while preparing a circuit substrate.

However, according to these two methods, the water absorption rate is superior but the adhesion strength is still inferior.

The present invention is made in consideration of the problems of the prior art, and it is one object of the present invention to provide a polyamic acid copolymer using as a precursor of a polyimide copolymer, and having superior heat resistant and adhesion strength with metal, and methods for preparing the same.

It is another object of the present invention to provide a polyimide copolymer that has a low water absorption rate and superior heat resistance while satisfying various physical properties, and thus can be used as an adhesive in IC packaging, etc, and methods for preparing the same.

It is another object of the present invention to provide a heat resistant adhesive composition comprising a polyamic acid copolymer or a polyimide copolymer.

It is another object of the present invention to provide a semiconductor device packaged by using the heat resistant adhesive composition.

In order to achieve these objects, the present invention provides a polyamic acid copolymer of a compound represented by the following Formula 2a, 2b, 2c, and 2d: 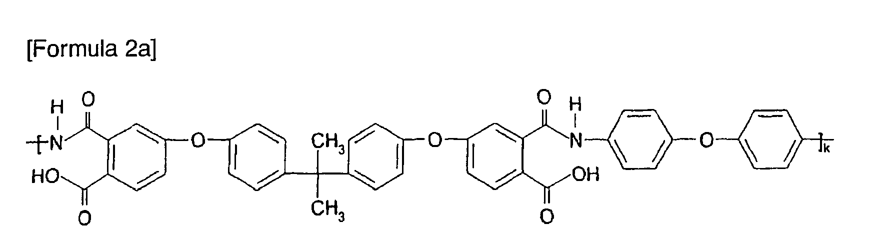 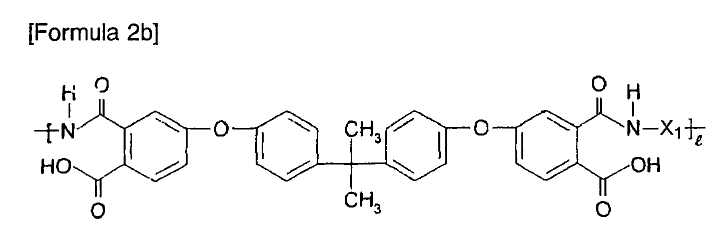 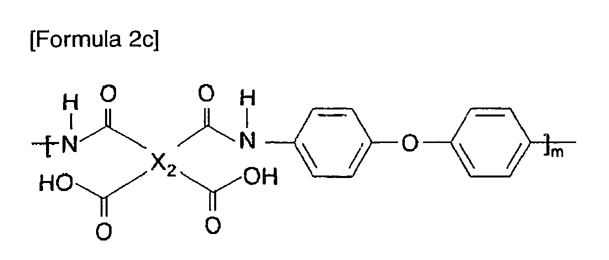 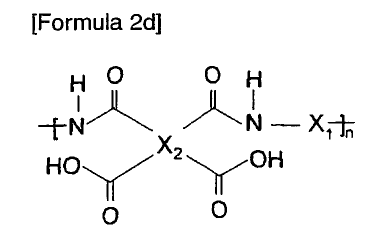 (In the above Chemical Formula 2a to 2d,
X₁ is a divalent organic substance with a structure of one or more kinds selected from the group consisting of 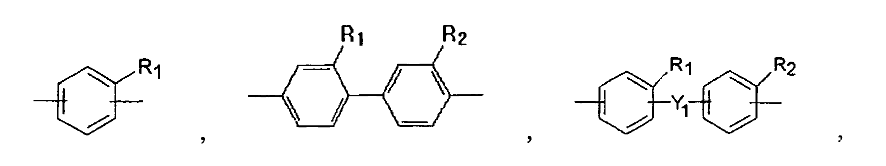 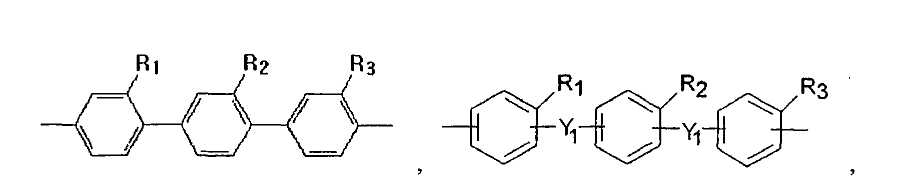 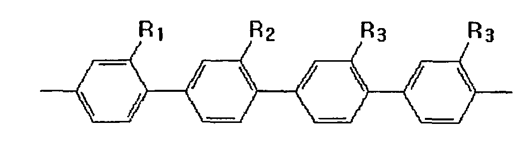 and 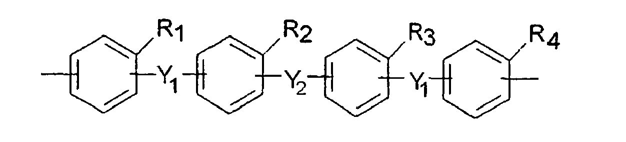 (wherein R₁, R₂, R₃, and R₄ are independently or simultaneously a hydrogen, methyl, hydroxy, or methoxy group; Y₁ and Y₂ are independently or simultaneously -O-, -CO-, -S-, -SO₂-, -C(CH₃)₂-, -CONH-, or -O(CH₂)ₙO-(wherein, n is an integer of 1 to 5.));
X₂ is a tetravalent organic substance with a structure of 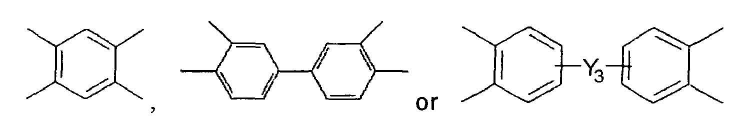 (wherein Y₃ is -O-, -CO-, or -CO₂(CH₂)ₙO₂C- (n is an integer of 1 to 5)); and
k is an integer of 1 or more; and ℓ, m, and n are independently integers of 0 or more, but there are not 0 simultaneously, provided that k≥ℓ, k+ℓ>1.5(m+n), and k+m>1.5(ℓ+n).)

The present invention also provides a method for preparing the polyamic acid copolymer of a compound represented by the Formula 2a, 2b, 2c, and 2d, comprising the steps of:

### polymerizing

a) one or more kinds of tetracarboxylic acid dianhydride; and
b) one or more kinds of aromatic diamine
   by the equivalent ratio of 0.9:1 ~ 1: 0.9 under an organic solvent.

The present invention also provides a polyimide copolymer of a compound represented by the following Formula 1 a, 1b, 1 c, and 1 d: 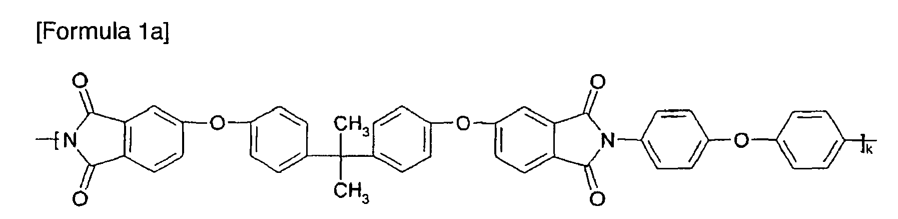 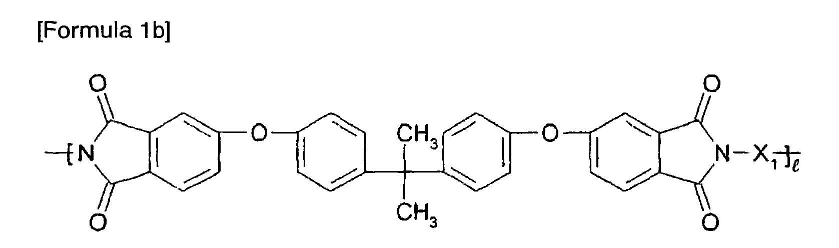 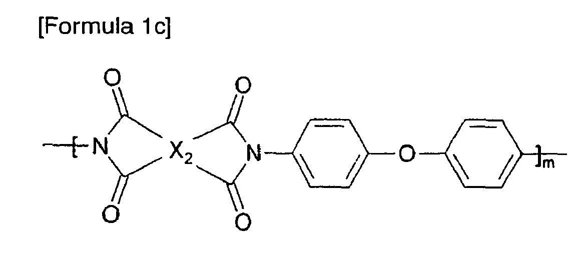 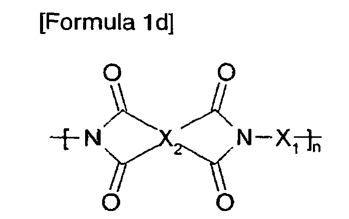 (In the above Chemical Formula 1 a to 1 d,
X₁ is a divalent organic substance with a structure of one or more kinds selected from the group consisting of 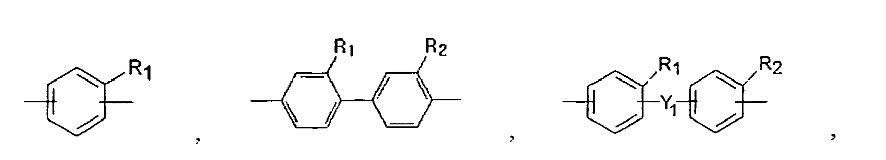 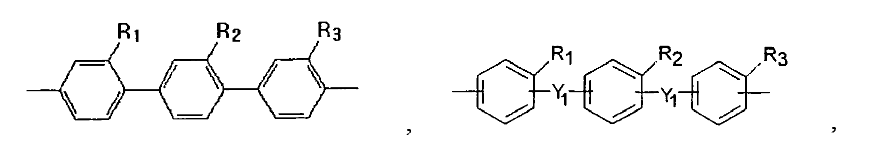 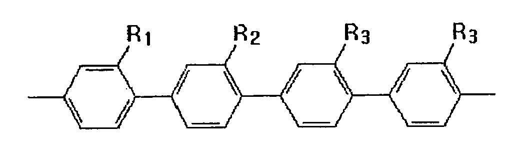 and 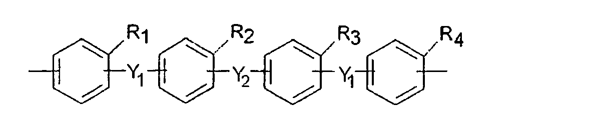 (wherein R₁, R₂, R₃, and R₄ are independently or simultaneously a hydrogen, methyl, hydroxy, or methoxy group; Y₁ and Y₂ are independently or simultaneously -O-, -CO-, -S-, -SO₂-, -C(CH₃)₂-, -CONH-, or -O(CH₂)ₙO-(wherein, n is an integer of 1 to 5.));
X₂ is a tetravalent organic substance with a structure of 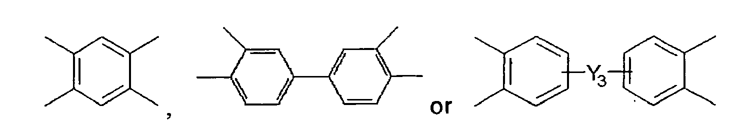 (wherein Y₃ is -O-, -CO-, or -CO₂(CH₂)ₙO₂C- (n is an integer of 1 to 5)); and
k is an integer of 1 or more; and ℓ, m, and n are independently integers of 0 or more, but there are not 0 simultaneously, provided that k≥ℓ, k+ℓ>1.5(m+n), and k+m>1.5(ℓ+n).)

The present invention also provides a method for preparing the polyimide copolymer of a compound represented by the Formula 1 a, 1b, 1 c, and 1 d, comprising the steps of:
converting to polyimide by heating the polyamic acid copolymer of a compound represented by the following Formula 2a, 2b, 2c, and 2d. 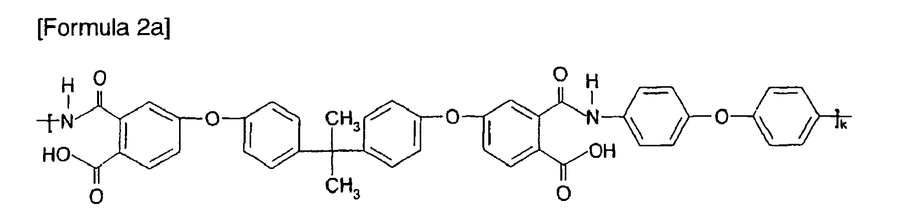 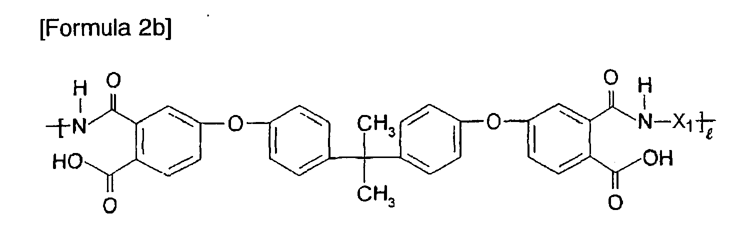 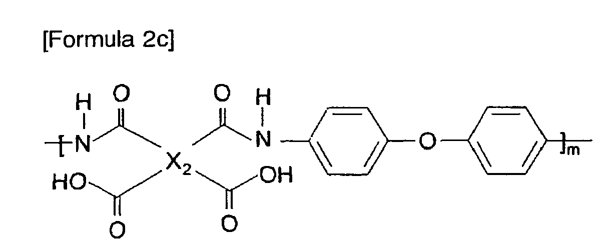 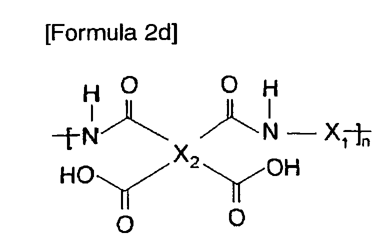 (In the above Chemical Formula 2a to 2d,
X₁ is a divalent organic substance with a structure of one or more kinds selected from the group consisting of 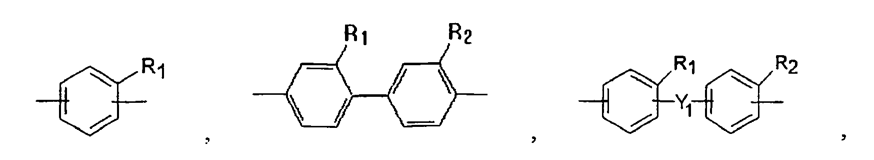 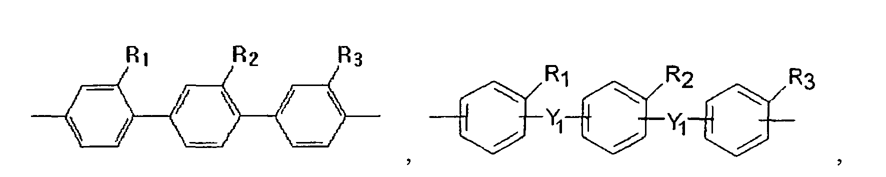 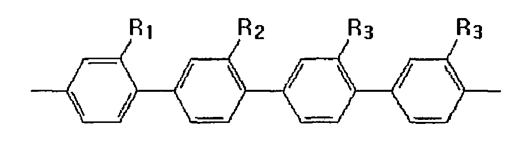 and 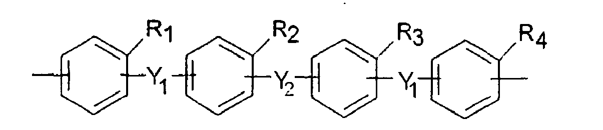 (wherein R₁, R₂, R₃, and R₄ are independently or simultaneously a hydrogen, methyl, hydroxy, or methoxy group; Y₁ and Y₂ are independently or simultaneously -O-, -CO-, -S-, -SO₂-, -C(CH₃)₂-, -CONH-, or -O(CH₂)ₙO-(wherein, n is an integer of 1 to 5.));
X₂ is a tetravalent organic substance with a structure of 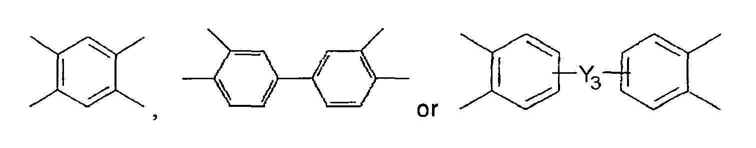
(wherein Y₃ is -O-, -CO-, or -CO₂(CH₂)ₙO₂C- (n is an integer of 1 to 5)); and
k is an integer of 1 or more; and t, m, and n are independently integers of 0 or more, but there are not 0 simultaneously, provided that k≥ℓ, k+ℓ>1.5(m+n), and k+m>1.5(ℓ+n).)

The present invention also provides a heat resistant adhesive composition comprising:
a) the polyamic acid copolymer of a compound represented by the Formula 2a, 2b, 2c, and 2d, or a polyimide copolymer of a compound represented by the Formula 1 a, 1 b, 1 c, and 1 d; and b) organic solvent.

The present invention also provides a semiconductor device packaged by using the heat resistant adhesive composition.

### DETAILED DESCRIPTION AND THE PREFERRED EMBODIMENTS

The present invention will now be explained in detail.

The present invention provides polyamic acid and method for preparing the same, which can be used in a precursor of polyimide copolymer and a heat resistant adhesive. The present invention also provides polyimide copolymer that has superior adhesion strength, low water absorption rate, and superior heat resistance, and thus it can be used for an adhesive for electronic parts of semiconductors, and method for preparing the same.

The polyamic acid copolymer of compound represented by the above Chemical Formula 2a, 2b, 2c, and 2d is prepared by polymerizing one or more kinds of tetracarboxylic acid dianhydride, and one or more kinds of aromatic diamine, under an organic solvent.

The polymerization from monomers into polyamic acid copolymer is an equilibrium reaction, because the temperature may be increased due to rapid polymerization, as the reaction temperature is low, a progress into polyamic acid copolymer is preferred. Therefore the polymerization is preferably conducted at 0 to 60 °C. If the temperature is higher than 60 °C, polyamic acid with a desired molecular weight cannot be obtained.

According to the present invention, because an equivalent ratio of the tetracarboxylic acid dianhydride and the aromatic diamine plays a critical role in molecular weight, it is required to exactly control equivalents in order to obtain a desired molecular weight. However, if the molecular weight is too large, fluidity of the adhesive is limited, and if the molecular weight is too small, the adhesive is easily broken and thus destruction occurs at that part to lower adhesive strength.

Accordingly, in the present invention, it is preferable to make the equivalent ratio be 0.9:1 ~ 1:0.9 and thus maintain an inherent viscosity of 0.2 dℓ/g or more, and preferably 0.2 to 0.5 dℓ/g. The molecular weight can also be controlled using monomers having one functional group that can participate in polymerization, such as aniline or phthalic acid anhydride.

The tetracarboxylic acid dianhydride is selected from the group consisting of pyromellitic acid dianhydride (PMDA), 3,3',4,4'-biphenyl tetracarboxylic acid dianhydride (BPDA), 4,4'-oxydi(phthalic acid anhydride) (ODPA), 3,3',4,4'-benzophenone-tetracarboxylic acid dianhydride (BTDA), trimellitic acid ethylene glycol dianhydride (TMEG), bisphenol-A-diphthalic acid dianhydride (BPADA), and a mixture thereof.

The aromatic diamine is selected from the group consisting of 1,3-phenyldiamine (mPDA), 4,4'-oxydianiline (4,4'-ODA), 3,4'-oxydianiline (3,4'-ODA), 4,4'-diaminobenzanilide (DABA), 3,3'-dihydroxy-4,4'-diaminobiphenyl (HAB), 1,4-di(4-aminophenyl)butane (DAPB), 1,3-bis(3-aminophenoxy)benzene (APB), 4,4'-1,3-phenylene diisopropylidene)dianiline (PDPDA), 2,2-bis[4-(4-aminophenoxy)phenyl]propane (BAPP), bis[4-(3-aminophenoxy)phenyl]sulfone (BAPSM), and a mixture thereof.

As the organic solvent, solvents having a polar group such as alcohol, ether, ketone, amide, and sulfur monooxide are preferably used. For example, it is preferably selected from the group consisting of N-methyl-2-pyrrolidone (NMP), N,N-dimethylacetamide (DMAc), N,N-dimethylformamide (DMA), dimethylsulfoxide (DMSO), and a mixture thereof.

The present invention also provides a polyimide copolymer consisting of a compound represented by the following Formula 1a, 1 b, 1 c, and 1 d.

The polyimide copolymer of the present invention shows a glass transition temperature of 150 to 250 °C and thus it can be adhered at 400 °C or less, which is lower than the decomposition temperature of a common adhesive. Its water absorption rate is 3% or less when immersed in a water bath for 24 hours, its adhesion strength with metal is 1.0 kg/cm² or more, and its average linear expansion coefficient is 40 to 70 ppm/°C at room temperature, which is below the glass transition temperature.

In the compound of the present invention represented by the above Chemical Formula 1 a, 1b, 1 c, or 1 d, X₁ is preferably a divalent organic substance of one or more kinds selected from the group consisting of the compounds of the following Chemical Formula: 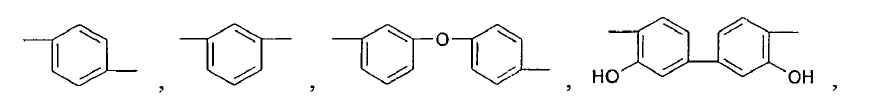 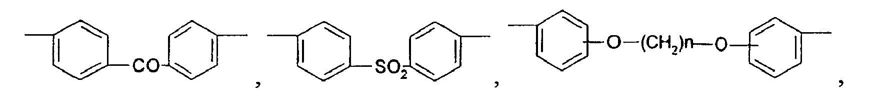 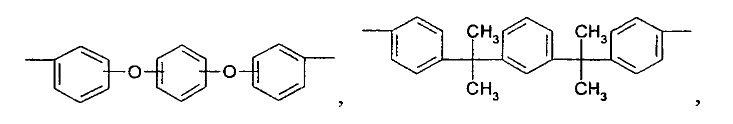 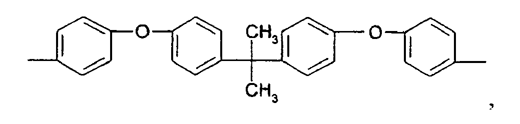 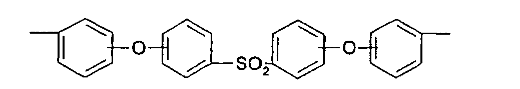 in the above Chemical Formula, n is an integer of 2 to 5.

The polyimide copolymer of the present invention is obtained from a polyamic acid copolymer of compound represented by the above Chemical Formula 2a, 2b, 2c, and 2d as precursor, by heating the polyamic acid copolymer to cure it.

In the present invention, the polyamic acid copolymer can be cured using a chemical method. Specifically, the polyamic acid copolymer can be reacted at room temperature and then cured by adding pyridine and acetic acid anhydride, or it can be reacted at a temperature range of 140 to 400 °C where imidation rapidly occurs to cause imidation. Therefore, the heat temperature is preferably 140 to 400 °C.

The present invention also provides a heat resistant adhesive composition comprising a) the polyamic acid copolymer of a compound represented by the Formula 2a, 2b, 2c, and 2d, or a polyimide copolymer of a compound represented by the Formula 1 a, 1b, 1 c, and 1 d; and b) organic solvent.

The content of the polyamic acid copolymer is preferably 10 to 30 wt% based on the total composition so as to control exothermic reaction, dissolve the polyamic acid copolymer that is reactant, and stir uniformly.

The content of the polyimide copolymer is preferably 10 to 50 wt% based on the total composition.

The organic solvent can be used a compound selected from the group consisting of N-methyl-2-pyrrolidone (NMP), N,N-dimethylacetamide (DMAc), N,N-dimethylformamide (DMA), dimethylsulfoxide (DMSO), and a mixture thereof.

In addition, the adhesive composition of the present invention may further comprise an additive selected from the group consisting of an antifomating agent, a gel preventing agent, and a curing accelerator at need.

The present invention can be prepared an adhesive in the form of a film by directly coating the polyamic acid copolymer obtained in the above process on metal and thermally-curing. The present invention also can be prepared an adhesive in the form of a film by directly coating the polyamic acid copolymer on metal and thermally-curing and pressurizing to adhere it. In addition, the present invention can be applied to a laminator by manufacturing in the film the polyimide copolymer by itself.

The adhesive film can be inserted between metal and metal or metal and a polymer film and then compressed in a press at 200 to 400 °C under 1 to 100 kg/cm² for 1 sec to 10 minutes, or it can be continuously adhered using a laminator.

Therefore, the present invention can provide an electric product that has superior adhesive strength between the surrounding parts constructing a semiconductor device by using in IC packaging the heat resistant adhesive composition or adhesive film obtained by the above, and can be provided preferably a semiconductor device.

The present invention will be explained in more detail with reference to the following Examples. However, these are to illustrate the present invention and the present invention is not limited to them.

### [Example]

Structures of monomers used in Examples and Comparative Examples are as follows:

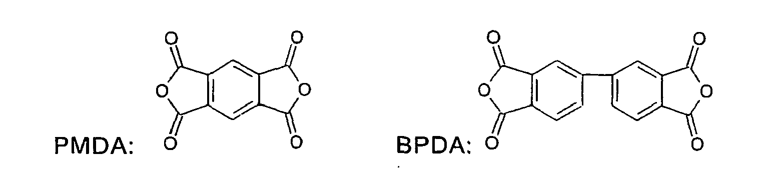

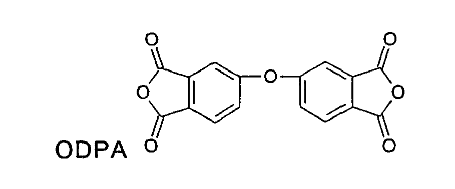

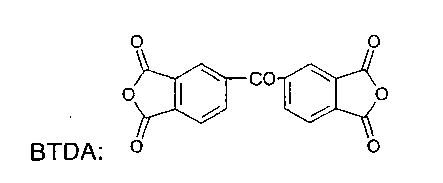

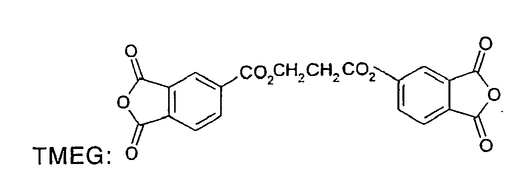

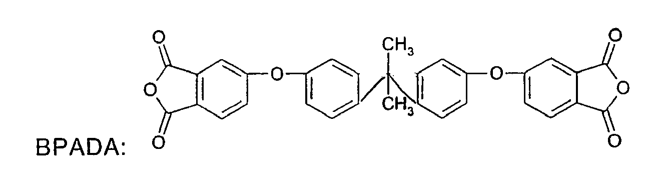

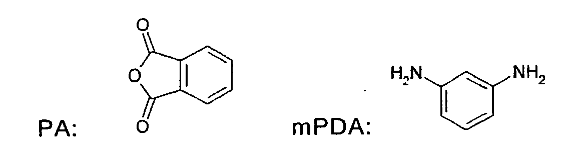

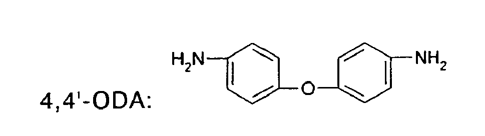

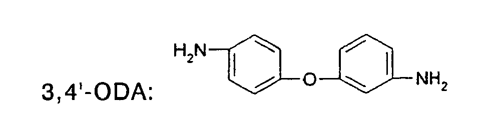

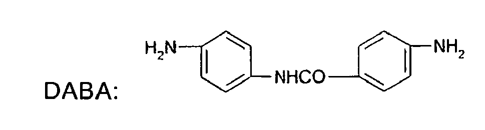

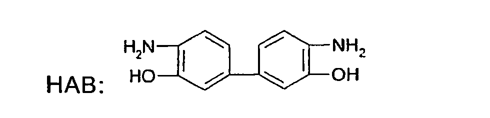

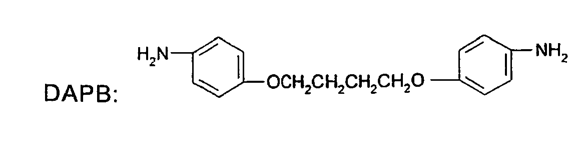

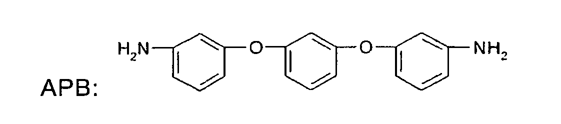

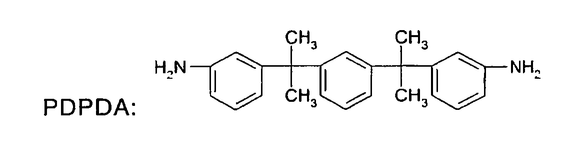

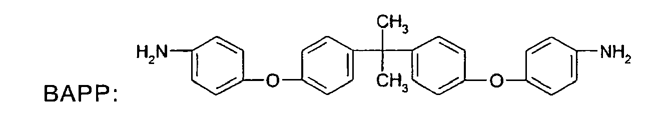

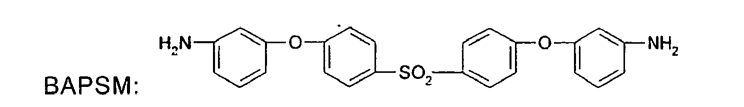

### [Example 1] (not according to the invention)

### Preparation of polyamic acid copolymer

The atmosphere in a flask was substituted with nitrogen, and 50 mℓ of NMP solvent and 2.464 g of 4,4'-ODA and 0.887 g of mPDA were introduced. After the 4,4'-ODA and mPDA was completely dissolved, 10.675 g of BPADA were introduced while maintaining 0 °C, and then the mixture was agitated for 24 hours to complete polymerization, thereby preparing polyamic acid copolymer.

### [Examples 2 to 16] (not according to the invention except example 15)

As shown in the following Table 1, the polyamic acid copolymers were obtained by the same method as in Example 1 while changing monomers and compositions of monomers.

### [Comparative Example 1]

After substituting the atmosphere in a flask with nitrogen, 60 mℓ of NMP solvent and 5.749 g of 4,4'-ODA were introduced. After completely dissolving the 4,4'-ODA, 9.251 g of BTDA were introduced while maintaining 0 °C, and then the mixture was agitated for 24 hours to complete polymerization, thereby preparing polyamic acid copolymer.

### [Comparative Example 2]

Polyamic acid copolymer was prepared by the same method as in Example 1, except that the composition was changed as shown in Table 1.

**[Table 1]**

| | Compositional ingredients | | | | Compositional ratio (mole ratio) | | | |
|---|---|---|---|---|---|---|---|---|
| | Anhydride (1) | Anhydride (2) | Amine (1) | Amine (2) | Anhydride (1) | Anhydride (2) | Amine (1) | Amine(2) |
| Example1 | BPADA | - | 4,4'-ODA | mPDA | 100 | - | 60 | 40 |
| Example2 | BPADA | - | 4,.4'-ODA | 3,4'-ODA | 100 | - | 60 | 40 |
| Example3 | BPADA | - | 4,4'-ODA | DABA | 100 | - | 80 | 20 |
| Example4 | BPADA | - | 4,4'-ODA | HAB | 100 | - | 80 | 20 |
| Exmaple5 | BPADA | - | 4,4'-ODA | DAPB | 100 | - | 90 | 10 |
| Eaxmple6 | BPADA | - | 4,4'-ODA | APB | 100 | - | 80 | 20 |
| Example7 | BPADA | - | 4,4'-ODA | PDPBA | 100 | - | 70 | 30 |
| Examle8 | BPADA | - | 4,4'-ODA | BAPP | 100 | - | 70 | 30 |
| Example9 | BPADA | - | 4,4'-ODA | BAPSM | 100 | - | 80 | 20 |
| Example10 | BPADA | PMDA | 4,4'-ODA | - | 90 | 10 | 100 | - |
| Example11 | BPADA | BPDA | 4,4'-ODA | - | 85 | 15 | 100 | - |
| Example12 | BPADA | ODPA | 4,4'-ODA | - | 75 | 25 | 100 | - |
| Example13 | BPADA | BTDA | 4,4'-ODA | - | 75 | 25 | 100 | - |
| Example14 | BPADA | TMEG | 4,4'-ODA | - | 80 | 20 | 100 | - |
| Example15* | BPADA | ODPA | 4,4'-ODA | BAPP | 80 | 20 | 80 | 20 |
| Example16 | BPADA | BTDA | 4,4'-ODA | APB | 70 | 30 | 70 | 30 |
| Comparative Example1 | BTDA | - | 4,4'-ODA | - | 100 | - | 100 | - |
| Comparative Example2 | BPADA | - | 4,4'-ODA | - | 90 | - | 100 | - |

| | | | | | | | | |
|---|---|---|---|---|---|---|---|---|
| * according to the invention | | | | | | | | |

### [Example 17] (not according to the invention)

Solution comprising 15 wt% of polyamic acid copolymer prepared by the Example 1, and 85 wt% of NMP was coated on a glass plate using a coater and left at room temperature for about 1 hour, and then maintained in an oven substituted with nitrogen at 140 °C for about 1 hour. The temperature was elevated to 200 °C at a speed of 5 °C per minute and the reactant was maintained at 200 °C for 30 minutes, the temperature was then elevated to 300 °C at a speed of 5 °C per minute and the reactant was maintained again at 300 °C for 30 minutes, and finally the reactant was slowly cooled to prepare a heat resistant adhesive comprising polyimide copolymer. Properties of the obtained heat resistant adhesive were measured by the following methods, and the results are shown in Table 2.

### [Tests]

1) Inherent viscosity: measured at a concentration of 0.5 wt% using polyamic acid copolymer before curing to polyimide copolymer, and NMP as a solvent.
2) water absorption rate: After being immersed in distilled water at room temperature for 24 hours, moisture contents were measured to obtain the water absorption rate.
3) Glass transition temperature (Tg): measured using DSC.
4) Adhesion strength: Adhesive film with a thickness of 25 µm was inserted between two electrolytic copper foils, and they were adhered in a press maintained at 280 °C with a pressure of 30 kg/cm² for 20 seconds. 180° peel strength of the obtained laminate was measured to represent adhesion strength.

### [Examples 18 to 33 and Comparative Examples 3 to 4] (not according to the invention except example 31)

The heat resistant adhesive comprising polyimide copolymers were prepared by the same method as in Example 17, except that the polyamic acid copolymer of Examples 2 to 16, and Comparative Examples 1 and 2 was used. Then, Properties of the obtained heat resistant adhesive were measured by the same method as in Example 17, and they are shown in the following Table 2.

**[Table 2]**

| | viscosity (dℓ/g) | water absorption rate(%) | T_{g} (°C) | Adhesion strength (kg/cm) |
|---|---|---|---|---|
| Example 17 | 0.46 | 1.3 | 220 | 1.1 |
| Example 18 | 0.39 | 1.3 | 220 | 1.1 |
| Example 19 | 0.38 | 1.3 | 121 | 1.2 |
| Example 20 | 0.37 | 1.5 | 222 | 1.3 |
| Example 21 | 0.34 | 1.6 | 237 | 1.4 |
| Example 22 | 0.44 | 1.3 | 206 | 1.3 |
| Example 23 | 0.46 | 1.1 | 208 | 1.8 |
| Example 24 | 0.36 | 1.1 | 209 | 1.4 |
| Example 25 | 0.47 | 1.0 | 205 | 1.5 |
| Example 26 | 0.46 | 1.4 | 212 | 1.5 |
| Example 27 | 0.40 | 1.2 | 252 | 0.6 |
| Example 28 | 0.43 | 1.3 | 230 | 0.9 |
| Example 29 | 0.21 | 1.5 | 231 | 1.2 |
| Example 30 | 0.39 | 1.5 | 226 | 1.6 |
| Example 31* | 0.27 | 1.5 | 210 | 1.5 |
| Example 32 | 0.31 | 1.5 | 210 | 1.4 |
| Comparative Example 3 | 0.38 | 2.1 | 277 | 0.1 |
| Comparative Example 4 | 0.18 | 2.0 | 220 | No film formation |

| | | | | |
|---|---|---|---|---|
| * according to the invention | | | | |

As shown in Table 2, Examples 17 to 33 of the present invention has low water absorption rates and glass transition temperatures, and superior adhesion strength due to having high viscosities compared to Comparative Examples 3 and 4.

### [Examples 34 to 49 and Comparative Example 5 to 6] (not according to the invention except example 48)

Each of solution comprising 15 wt% of polyamic acid copolymer prepared by and methods as in Examples 1 to 16, and Comparative Examples 1 and 2, and 85 wt% of NMP was used, and was cured under the same conditions as in Example 17 by coating on a copper foil instead of a glass plate using a coater. The adhesive strength of adhesive comprising polyimide copolymer obtained by the above were measured and the results are shown in Table 3.

**[Table 3]**

| | Composition | Adhesion strength (kg/cm2) |
|---|---|---|
| Example 34 | Example 1 | 1.5 |
| Example 35 | Example 2 | 1.4 |
| Example 36 | Example 3 | 1.4 |
| Example 37 | Example 4 | 1.7 |
| Example 38 | Example 5 | 1.9 |
| Example 39 | Example 6 | 1.4 |
| Example 40 | Example 7 | 1.8 |
| Example 41 | Example 8 | 1.5 |
| Example 42 | Example 9 | 1.8 |
| Example 43 | Example 10 | 1.7 |
| Example 44 | Example 11 | 1.0 |
| Example 45 | Example 12 | 1.1 |
| Example 46 | Example 13 | 1.2 |
| Example 47 | Example 14 | 1.5 |
| Example 48* | Example 15 | 1.6 |
| Example 49 | Example 16 | 1.7 |
| Comparative Example 5 | Comparative Example 1 | 0.6 |
| Comparative Example 6 | Comparative Example 2 | No film formation |

| | | |
|---|---|---|
| * according to the invention | | |

As shown in Table 3, Examples 30 to 49 of the present invention had superior adhesion strength compared to Comparative Examples 5 and 6, even if a copper foil instead of a glass plate was used.

As explained, the polyamic acid copolymer used in a precursor and polyimide copolymer obtained therefrom of the present invention has superior adhesion strength and simultaneously satisfies physical properties like high heat resistance and low water absorption rate, and thus it can effectively adhere parts of semiconductor devices.

## Claims

1. A heat resistant adhesive composition comprising:
a) a polyimide copolymer of compounds represented by the Formulae 1a, 1b, 1c, and 1d, or a polyamic acid copolymer of compounds represented by the Formulae 2a, 2b, 2c, and 2d, wherein the inherent viscosity of the polyamic acid copolymer is 0.2 to 0.5 dl/g ; and
b) an organic solvent selected from the group consisting of N-methyl-2-pyrrolidone (NMP), N,N-dimethylacetamide (DMAc), N,N-dimethylformamide (DMF) and dimethylsulfoxide (DMSO);
wherein the content of the polyimide copolymer is 10 to 50 wt% based on the total composition and the content of the polyamic acid copolymer is 10 to 30 wt% based on the total composition: 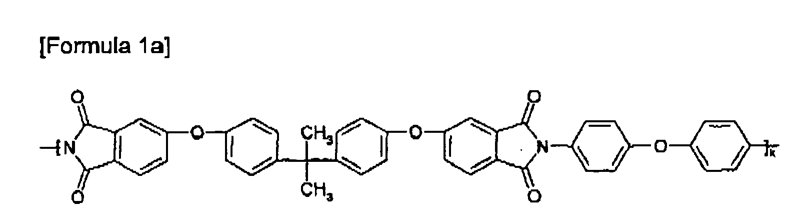 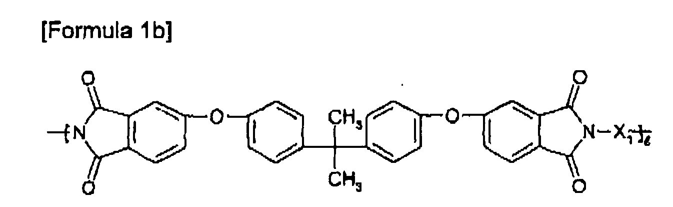 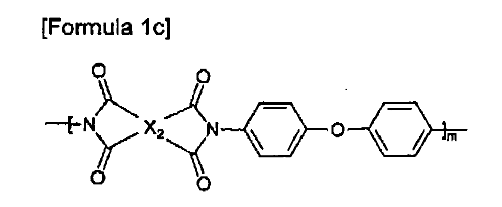 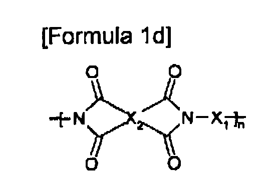 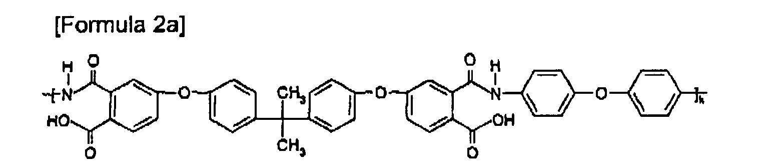 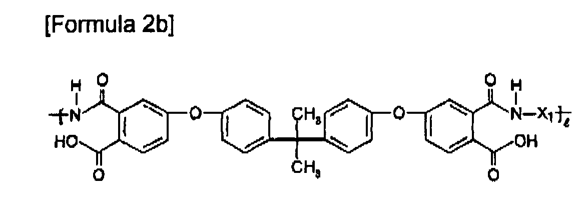 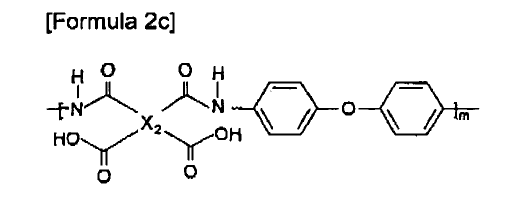 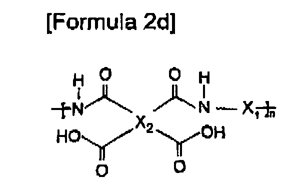 where, in the above Chemical Formulae 1a to 2d,
X₁ is a divalent organic substance with a structure of one or more kinds selected from the group consisting of 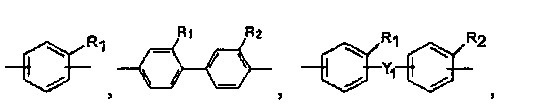 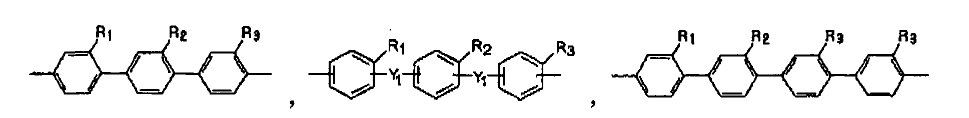 and 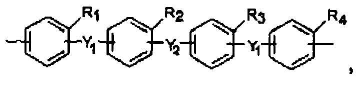 wherein R₁, R₂, R₃, and R₄ are independently or simultaneously a hydrogen, methyl, hydroxy, or methoxy group; Y₁ and Y₂ are independently or simultaneously -O-, -CO-, -S-, -SO₂-, -C(CH₃)₂-, -CONH-, or - O(CH₂)ₙO- (wherein, n is an integer of 1 to 5),
X₂ is a tetravalent organic substance with a structure of 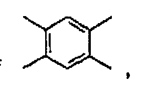 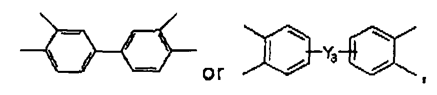 wherein Y₃ is -O-, or -CO₂(CH₂)ₙO₂C- (n is an integer of 1 to 5),
k and ℓ are integers of 1 or more, and
m, and n are independently integers of 0 or more, but are not 0 simultaneously, provided that k≥ℓ, k+ℓ>1,5(m+n), and k+m>1,5(ℓ+n).

2. The heat resistant adhesive composition according to Claim 1, wherein the composition further comprises an additive selected from the group consisting of an antifoaming agent, a gel preventing agent, and a curing accelerator.

3. A semiconductor device packaged by using the heat resistant adhesive composition of Claim 1.

4. A method for preparing a heat resistant adhesive composition comprising a polyamic acid copolymer of compounds represented by the Formulae 2a, 2b, 2c, and 2d of Claim 1, comprising the steps of :
polymerizing
a) one or more kinds of tetracarboxylic acid dianhydride ; and
b) one or more kinds of aromatic diamine by the equivalent ratio of 0,9:1 - 1: 0,9, in an organic solvent selected from the group consisting of N-methyl-2-pyrrolidone (NMP), N,N-dimethylacetamide (DMAc), N,N-dimethylformamide (DMF) and dimethylsulfoxide (DMSO),
wherein the inherent viscosity of the prepared polyamic acid copolymer is 0.2 to 0.5 dl/g.

5. The method according to Claim 4, wherein the polymerizing is carried out at a temperature of 0 to 60 °C.

6. The method according to Claim 4, wherein the a) tetracarboxylic acid dianhydride is selected from the group consisting of pyromellitic acid dianhydride (PMDA), 3,3',4,4'-biphenyl tetracarboxylic acid dianhydride (BPDA), 4,4'-oxydi(phthalic acid anhydride) (ODPA), 3,3',4,4'-benzophenone-tetracarboxylic acid dianhydride (BTDA), trimellitic acid ethylene glycol dianhydride (TMEG), bisphenol-A-diphthalic acid dianhydride (BPADA), and a mixture thereof.

7. The method according to Claim 4, wherein the b) aromatic diamine is selected from the group consisting of 1,3-phenyldiamine (MPDA), 4,4'-oxydianiline (4,4'-ODA), 3,4'-oxydianiline (3,4'-ODA), 4,4'-diaminobenzanilide (DABA), 3,3'-dihydroxy-4,4'-diaminoblphenyl (HAB), 1,4-di(4-aminophenyl)butane (DAPB), 1,3-bis(3-aminophenoxy)benzene (APB), 4,4'-1,3-phenylenediisopropylidene)dianiline (PDPDA), 2,2-bis[4-(4-aminophenoxy)phenyl]propane (BAPP), bis[4-(3-aminophenoxy)phenyl]sulfone (BAPSM), and a mixture thereof.

8. A method for preparing a heat resistant adhesive composition comprising a polyimide copolymer of compounds represented by the Formulae 1a, 1b, 1 c, and 1d of the Claim 1, comprising the steps of :
converting to polyimide by heating the polyamic acid copolymer of compounds represented by Formulae 2a, 2b, 2c, and 2d of claim 1 under an organic solvent selected from the group consisting of N-methyl-2-pyrrolidone (NMP), N,N-dimethylacetamide (DMAc), N,N-dimethylformamide (DMF) and dimethylsulfoxide (DMSO).

9. The method according to Claim 8, wherein the heating temperature is 140 to 400 °C.

10. Use of a polyamic acid copolymer of compounds represented by the Formulae 2a, 2b, 2c, and 2d of claim 1, or a polyimide copolymer of compounds represented by the Formulae 1a, 1 b, 1c, and 1 d of claim 1, under an organic solvent selected from the group consisting of N-methyl-2-pyrrolidone (NMP), N,N-dimethylacetamide (DMAc), N,N-dimethylformamide (DMF) and dimethylsulfoxide (DMSO) for the preparation of a heat resistant adhesive composition.

## Patentansprüche

1. Wärmebeständige Klebstoffzusammensetzung, die Folgendes umfasst:
a) ein Polyimidcopolymer aus Verbindungen, die durch die Formeln 1a, 1b, 1c und 1d repräsentiert sind, oder ein Polyaminsäurecopolymer aus Verbindungen, die durch die Formeln 2a, 2b, 2c und 2d repräsentiert sind, wobei die inhärente Viskosität des Polyaminsäurecopolymers 0,2 bis 0,5 dl/g beträgt; und
b) ein organisches Lösungsmittel, das ausgewählt ist aus der Gruppe bestehend aus N-Methyl-2-pyrrolidon (NMP), N,N-Dimethylacetamid (DMAc), N,N-Dimethylformamid (DMF) und Dimethylsulfoxid (DMSO);
wobei der Gehalt des Polyimidcopolymers 10 bis 50 Gew.-% bezogen auf die Gesamtzusammensetzung beträgt und der Gehalt des Polyaminsäurecopolymers 10 bis 30 Gew.-% bezogen auf die Gesamtzusammensetzung beträgt: 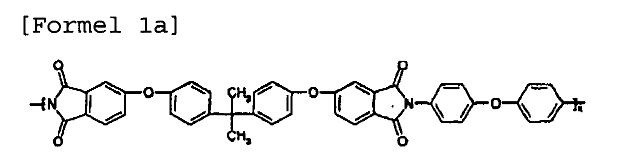 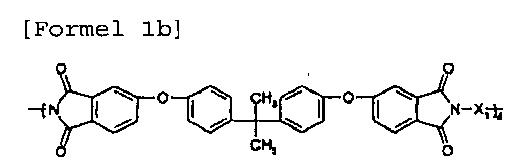 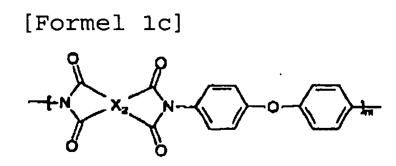 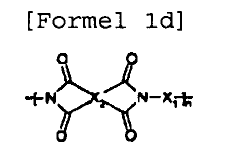 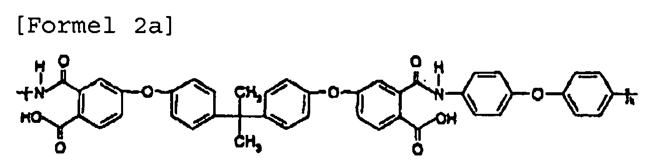 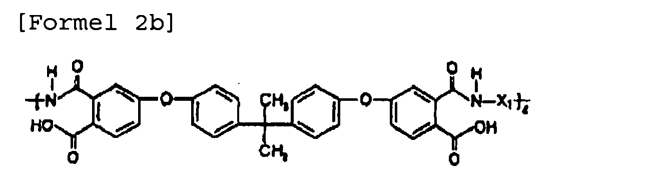 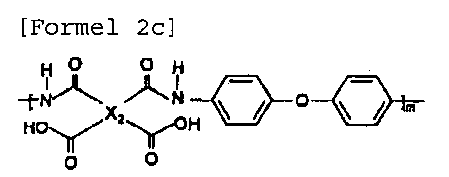 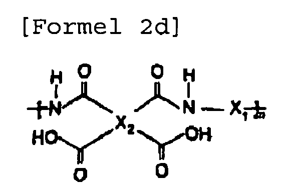 wobei in den obigen chemischen Formeln 1a bis 2d
X₁ eine zweiwertige organische Substanz mit einer oder mehreren Strukturarten ist, ausgewählt aus der Gruppe bestehend aus 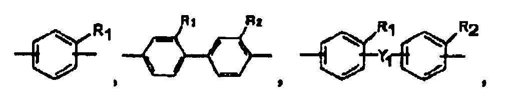 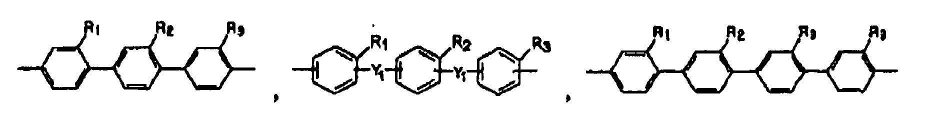 und 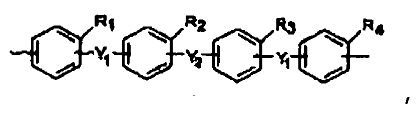 wobei R₁, R₂, R₃ und R₄ unabhängig oder gleichzeitig eine Wasserstoff-, Methyl-, Hydroxy- oder Methoxygruppe sind; Y₁ und Y₂ unabhängig oder gleichzeitig -O-, -CO-, -S-, -SO₂-, -C(CH₃)₂-, -CONH- oder - O(CH₂)ₙO- sind (wobei n eine ganze Zahl von 1 bis 5 ist),
X₂ eine vierwertige organische Substanz mit der Struktur 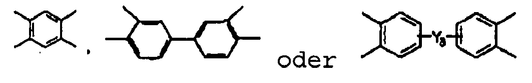 ist,
wobei Y₃ -O- oder -CO₂(CH₂)ₙO₂C- ist (wobei n eine ganze Zahl von 1 bis 5 ist),
k und ℓ ganze Zahlen von 1 oder mehr sind und
m und n unabhängig ganze Zahlen von 0 oder mehr, aber nicht gleichzeitig 0 sind, unter der Voraussetzung, dass k≥ℓ, k+ℓ>1,5 (m+n) und k+m>1,5 (ℓ+n).

2. Wärmebeständige Klebstoffzusammensetzung nach Anspruch 1, wobei die Zusammensetzung ferner einen Zusatzstoff umfasst, der ausgewählt ist aus der Gruppe bestehend aus einem Antischaummittel, einem Gelvermeidungsmittel und einem Härtungsbeschleuniger.

3. Halbleiterbauelement, das mit der wärmebeständigen Klebstoffzusammensetzung aus Anspruch 1 verpackt ist.

4. Verfahren zur Herstellung einer wärmebeständigen Klebstoffzusammensetzung, die ein Polyaminsäurecopolymer aus Verbindungen umfasst, die repräsentiert sind durch die Formeln 2a, 2b, 2c und 2d aus Anspruch 1, das die folgenden Schritte beinhaltet:
Polymerisieren von
a) einer oder mehreren Arten von Tetracarbonsäuredianhydrid; und
b) einer oder mehreren Arten von aromatischem Diamin in einem Äquivalenzverhältnis von 0,9:1 - 1:0,9 in einem organischen Lösungsmittel, das ausgewählt ist aus der Gruppe bestehend aus N-Methyl-2-pyrrolidon (NMP), N,N-Dimethylacetamid (DMAc), N,N-Dimethylformamid (DMF) und Dimethylsulfoxid (DMSO),
wobei die inhärente Viskosität des hergestellten Polyaminsäurecopolymers 0,2 bis 0,5 dl/g beträgt.

5. Verfahren nach Anspruch 4, wobei das Polymerisieren bei einer Temperatur von 0 bis 60°C stattfindet.

6. Verfahren nach Anspruch 4, wobei a) das Tetracarbonsäuredianhydrid ausgewählt wird aus der Gruppe bestehend aus Pyromellithsäuredianhydrid (PMDA), 3,3',4,4'-Biphenyltetracarbonsäuredianhydrid (BPDA), 4,4'-Oxydi(phthalsäureanhydrid) (ODPA), 3,3',4,4'-Benzophenontetracarbonsäuredianhydrid (BTDA), Trimellithsäureethylenglykoldianhydrid (TMEG), Bisphenol-A-diphthalsäuredianhydrid (BPADA) und einem Gemisch davon.

7. Verfahren nach Anspruch 4, wobei das b) aromatische Diamin ausgewählt wird aus der Gruppe bestehend aus 1,3-Phenyldiamin (MPDA), 4,4'-Oxydianilin(4,4'-ODA), 3,4'-Oxydianilin (3,4'-ODA), 4,4'-Diaminobenzanilid (DABA), 3,3'-Dihydroxy-4,4'-diaminobiphenyl (HAB), 1,4-Di(4-aminophenyl)butan (DAPB), 1,3-Bis(3-aminophenoxy)benzol (APB), 4,4'-1,3-Phenylendiisopropyliden)dianilin (PDPDA), 2,2-Bis[4-(4-aminophenoxy)phenyl]propan (BAPP), Bis [4- (3-aminophenoxy)phenyl]sulfon (BAPSM) und einem Gemisch davon.

8. Verfahren zur Herstellung einer wärmebeständigen Klebstoffzusammensetzung, die ein Polyimidcopolymer aus Verbindungen umfasst, die repräsentiert sind durch die Formeln 1a, 1b, 1c und 1d aus Anspruch 1, das die folgenden Schritte beinhaltet:
Umwandeln in Polyimid durch Erhitzen des Polyaminsäurecopolymers aus Verbindungen, die repräsentiert sind durch die Formeln 2a, 2b, 2c und 2d aus Anspruch 1, in einem organischen Lösungsmittel, das ausgewählt ist aus der Gruppe bestehend aus N-Methyl-2-pyrrolidon (NMP), N,N-Dimethylacetamid (DMAc), N,N-Dimethylformamid (DMF) und Dimethylsulfoxid (DMSO).

9. Verfahren nach Anspruch 8, wobei die Heiztemperatur 140 bis 400°C beträgt.

10. Verwendung eines Polyaminsäurecopolymers aus Verbindungen, die repräsentiert sind durch die Formeln 2a, 2b, 2c und 2d aus Anspruch 1, oder eines Polyimidcopolymers aus Verbindungen, die repräsentiert sind durch die Formeln 1a, 1b, 1c und 1d aus Anspruch 1, in einem organischen Lösungsmittel, das ausgewählt ist aus der Gruppe bestehend aus N-Methyl-2-pyrrolidon (NMP), N,N-Dimethylacetamid (DMAc), N,N-Dimethylformamid (DMF) und Dimethylsulfoxid (DMSO), zur Herstellung einer wärmebeständigen Klebstoffzusammensetzung.

## Revendications

1. Composition adhésive résistante à la chaleur, comprenant :
a) un copolymère de poly(imide) de composés représentés par les formules 1a, 1b, 1c et 1d, ou un copolymère d'acide polyamique de composés représentés par les formules 2a, 2b, 2c et 2d, où la viscosité inhérente du copolymère d'acide polyamique est de 0,2 à 0,5 dL/g ; et
b) un solvant organique choisi dans le groupe constitué par la N-méthyl-2-pyrrolidone (NMP), le N,N-diméthylacétamide (DMAc), le N,N-diméthylformamide (DMF) et le diméthylsulfoxyde (DMSO) ;
dans laquelle la teneur du copolymère de poly(imide) va de 10 à 50 % en poids par rapport à la composition totale et la teneur du copolymère d'acide polyamique va de 10 à 30 % en poids par rapport à la composition totale : 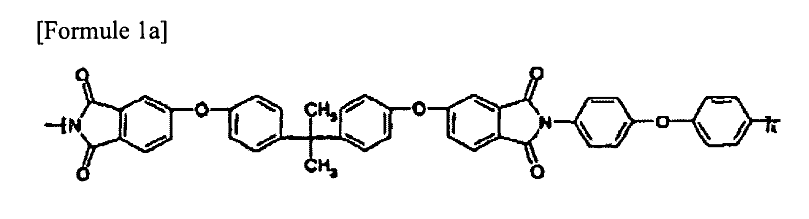 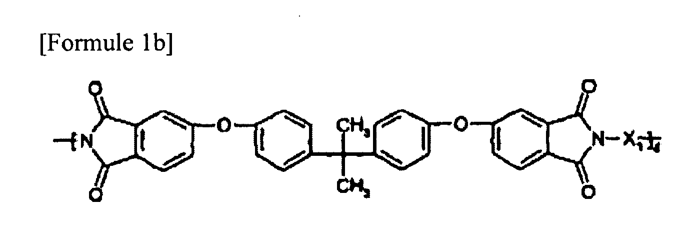 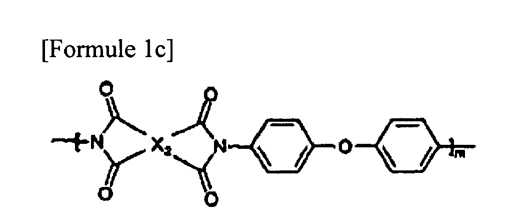 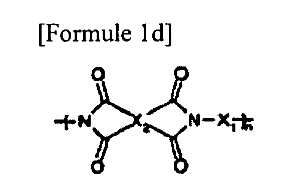 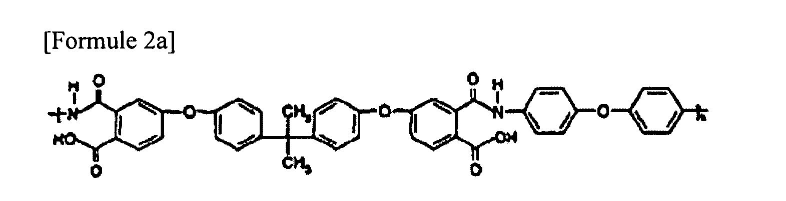 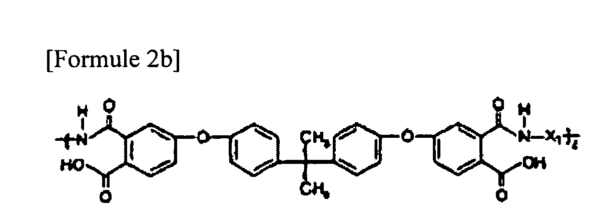 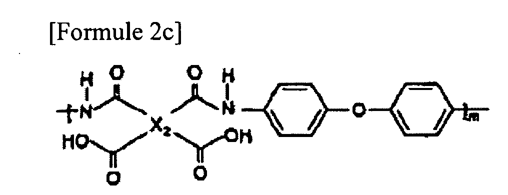 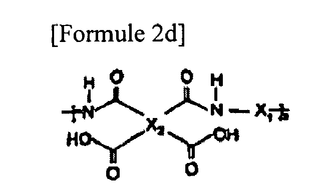 où, dans les formules chimiques 1a à 2d ci-dessus,
X₁ est une substance organique divalente ayant une structure d'un ou plusieurs types choisis dans le groupe constitué par 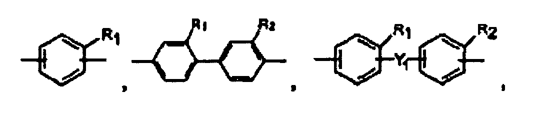 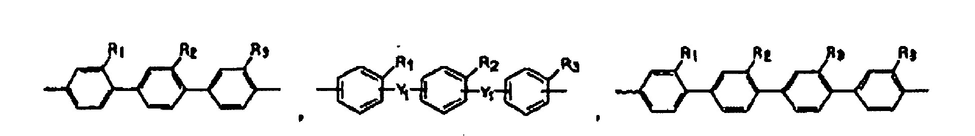 et 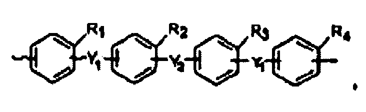 où R₁, R₂, R₃ et R₄ sont indépendamment ou simultanément un atome d'hydrogène, un groupe méthyle, hydroxy ou méthoxy ; Y₁ et Y₂ sont indépendamment ou simultanément -O-, -CO-, -S-, -SO₂-, -C(CH₃)₂-, -CONH-, ou - O(CH₂)ₙO- (où n est un nombre entier de 1 à 5),
X₂ est une substance organique tétravalente ayant une structure 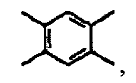 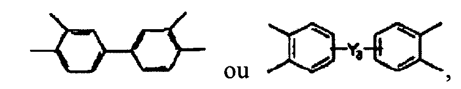 où Y₃ est -O- ou -CO₂(CH₂)ₙO₂C- (n est un nombre entier de 1 à 5),
k et 1 sont des nombres entiers d'au moins 1, et
m et n sont indépendamment des nombres entiers d'au moins 0, mais ne sont pas 0 simultanément, à condition que k≥1, k+1>1,5(m+n), et k+m>1,5(1+n).

2. Composition adhésive résistante à la chaleur selon la revendication 1, dans laquelle la composition comprend en outre un additif choisi dans le groupe constitué par un agent antimousse, un agent anti-gélification et un accélérateur de durcissement.

3. Dispositif semi-conducteur emballé à l'aide de la composition adhésive résistante à la chaleur de la revendication 1.

4. Procédé de préparation d'une composition adhésive résistante à la chaleur comprenant un copolymère d'acide polyamique de composés représentés par les formules 2a, 2b, 2c et 2d de la revendication 1, comprenant les étapes consistant à :
polymériser
a) un ou plusieurs types de dianhydride d'acide tétracarboxylique ; et
b) un ou plusieurs types de diamine aromatique par le rapport équivalent de 0,9 :1 à 1 :0,9, dans un solvant organique choisi dans le groupe constitué par la N-méthyl-2-pyrrolidone (NMP), le N,N-diméthylacétamide (DMAc), le N,N-diméthylformamide (DMF) et le diméthylsulfoxyde (DMSO) ;
où la viscosité inhérente du copolymère d'acide polyamique préparé est de 0,2 à 0,5 dL/g.

5. Procédé selon la revendication 4, dans lequel la polymérisation est réalisée à une température de 0 à 60 °C.

6. Procédé selon la revendication 4, dans lequel le dianhydride d'acide tétracarboxylique a) est choisi dans le groupe constitué par le dianhydride d'acide pyroméllitique (PMDA), le dianhydride d'acide 3,3',4,4'-biphényl tétracarboxylique (BPDA), le 4,4'-oxydi(anhydride d'acide phtalique) (ODPA), le dianhydride d'acide 3,3',4,4'-benzophénone tétracarboxylique (BTDA), le dianhydride d'éthylène glycol d'acide triméllitique (TMEG), le bisphénol-A dianhydride d'acide diphtalique (BPADA) et leurs mélanges.

7. Procédé selon la revendication 4, dans lequel la diamine aromatique b) est choisie dans le groupe constitué par la 1,3-phényldiamine (MPDA), la 4,4'-oxydianiline (4,4'-ODA), la 3,4'-oxydianiline (3,4'-ODA), le 4,4'-diaminobenzanilide (DABA), le 3,3'-dihydro-4,4'-diaminobiphényle (HAB), le 1,4-di(4-aminophényl)butane (DAPB), le 1,3-bis(3-aminophénoxy)benzène (APB), la 4,4'-1,3-phénylènedi(isopropylidène)dianiline (PDPDA), le 2,2-bis[4-(4-aminophénoxy)phényl]propane (BAPP), la bis [4-(3-aminophénoxy)phényl]sulfone (BAPSM), et leurs mélanges.

8. Procédé de préparation d'une composition adhésive résistante à la chaleur comprenant un copolymère de polyimide de composés représentés par les formules 1a, 1b, 1c et 1d de la revendication 1, comprenant les étapes consistant à :
convertir en polyimide par chauffage du copolymère d'acide polyamique de composés représentés par les formules 2a, 2b, 2c et 2 d de la revendication 1 dans un solvant organique choisi dans le groupe constitué par la N-méthyl-2-pyrrolidone (NMP), le N,N-diméthylacétamide (DMAc), le N,N-diméthylformamide (DMF) et le diméthylsulfoxyde (DMSO).

9. Procédé selon la revendication 8, dans lequel la température de chauffage est de 140 à 400 °C.

10. Utilisation d'un copolymère d'acide polyamique de composés représentés par les formules 2a, 2b, 2c et 2d de la revendication 1 ou d'un copolymère de polyimide de composés représentés par les formules 1a, 1b, 1c et 1d de la revendication 1, dans un solvant organique choisi dans le groupe constitué par la N-méthyl-2-pyrrolidone (NMP), le N,N-diméthylacétamide (DMAc), le N,N-diméthylformamide (DMF) et le diméthylsulfoxyde (DMSO) pour la préparation d'une composition adhésive résistante à la chaleur.
